Europäisches Patentamt

(19) **European Patent Office**

Office européen des brevets

(11) Publication number: **0 218 304**
**B1**

# EUROPEAN PATENT SPECIFICATION

(45) Date of publication of the patent specification:
**17.05.89**

(51) Int. Cl.⁴: **F15B 1/047, F24D 3/10**

(21) Application number: **86201729.0**

(22) Date of filing: **06.10.86**

(54) **Expansion tank with a bladder-type diaphragm.**

(30) Priority: **07.10.85 NL 8502736**

(43) Date of publication of application:
**15.04.87 Bulletin 87/16**

(45) Publication of the grant of the patent:
**17.05.89 Bulletin 89/20**

(84) Designated Contracting States:
**AT BE CH DE ES FR GB IT LI LU NL SE**

(56) References cited:
**FR-A- 1 447 979**
**US-A- 2 378 467**
**US-A- 2 397 248**
**US-A- 2 421 076**
**US-A- 2 465 908**
**US-A- 3 506 037**

(73) Proprietor: **FLAMCO B.V., Industriestraat 6, NL-2802 AC Gouda(NL)**

(72) Inventor: **Hilverdink, Johan, 9, Aardbolhof, NL-3951 EB Maarn(NL)**

(74) Representative: **Timmers, Cornelis Herman Johannes et al, EXTERPATENT P.O. Box 90649, NL-2509 LP 's-Gravenhage(NL)**

## Description

The invention relates to an expansion tank provided with a bladder fitted inside the tank.

Expansion tanks of that type comprise in general a housing, in which is fitted an elastic bladder which serves as a partition between a liquid and a pressurized gas. Disposed in the wall of the housing is a connection aperture for connection of the expansion to a system which contains a quantity of liquid which is subject to volume changes, e.g. a water pipe system or a hot water supply system. The bladder is connected around the connection aperture to the housing and is provided with an opening, so that the interior of the bladder can be connected with the interior of the system with the liquid. The connection aperture is generally disposed on the centre line of the expansion tank. During use, the liquid is present in the bladder, while the pressurized gas is in the space between the diaphragm and the housing. This gas can be fed via a connecting nipple into this space.

An expansion tank of the above type is known from US-A 2 397 248. In this known expansion tank the bladder is made up of two parts, an upper moulded part and a lower moulded part which are vulcanized together along a tapered surface. Moulded within the bladder in the region of the connecting seam is a continuous spring which stiffens the bladder.

Although the two parts of the bladder in the known expansion tank may be relatively easy to manufacture, this bladder has the disadvantage that connecting the two parts to each other is rather difficult. Both pre-moulded bladder parts are at least partially vulcanized and special precautions have to be taken in order to be assured of good adherence between the two parts. Furthermore, moulding the stiffening spring into the bladder requires special measures.

The object of the invention to eliminate the above-mentioned disadvantages to provide an expansion tank with a bladder which is easy to manufacture and which is prevented from being pressed together in an uncontrolled fashion.

This object is achieved by an expansion tank comprising a housing and a bladder inside the housing, the bladder being made up of two parts connected to each other along their free edges and comprising means fixed to the bladder for holding it open, characterized in that each part has peripheral outwardly-extending free edge and the free edges of the two bladder parts are clamped onto each other in a sealing fashion by a rigid clamping ring having an essentially U-shaped cross-section defining two inwardly extending legs, the free edges of the two bladder parts being accommodated between the legs of the clamping ring, said clamping ring serving to hold the bladder open.

The two parts of the bladder of such an expansion tank are connected to each other in a simple manner by means of the clamping ring, which clamping ring also functions as an open holding element for the bladder.

US-A 3 506 037 also discloses an expansion tank provided with a bladder fitted inside the tank. The bladder is provided with a metal band disposed inside the bladder which serves as an open-holding element. The bladder, however, consists of only one part and is therefore difficult to manufacture. Moreover, installing the metal band inside the bladder is difficult and a proper positioning of the bladder inside the tank is not always ensured.

Preferred embodiments of the expansion tank according to the invention are claimed in the dependent claims.

The invention will be further explained in the following description of a preferred embodiment of an expansion tank with reference to the drawings.

Fig. 1 is a cross section of an expansion tank according to the invention, where the bladder is in the virtually completely collapsed position;

Fig. 2 is a cross section of the expansion tank of Fig. 1, with the bladder in the half-expanded state;

Fig 3 is a cross section of the expansion tank of Fig. 1, with the bladder in the virtually fully expanded state;

Fig. 4 is a cross section on an enlarged scale of the connecting seam of the two bladder parts with open-holding element according to detail IV in Fig. 1.

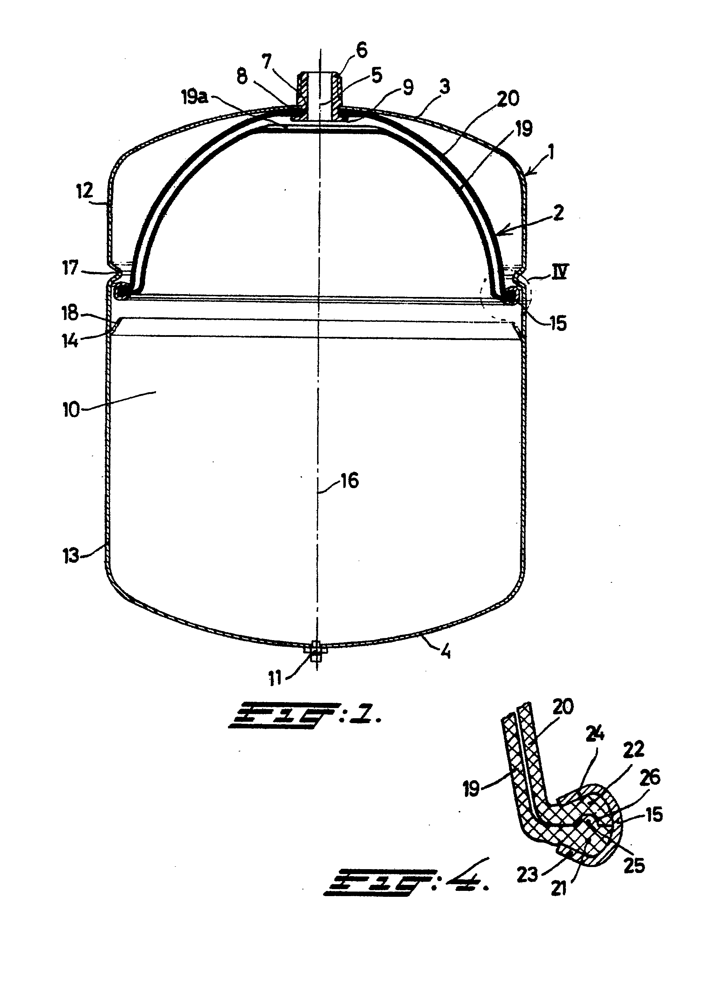

The expansion tank shown in Fig. 1 comprises a housing 1 and disposed therein an elastic bladder 2. The housing is essentially cylindrical and is provided with two bottoms 3 and 4. Disposed in the bottom 3 is a connection aperture 5, in which a connecting nipple 6 is fitted. The bladder is also provided with an opening 7. The edge 8 of this opening is clamped at the connection aperture 5 between the bottom 3 and a radially extending edge 9 of the nipple 6, as a result of which the bladder 2 is connected to the housing 1.

Via the connecting nipple 6 the expansion tank can be connected to the system in which there is a quantity of liquid which is subject to volume change, e.d. a water pipe system or a hot water supply system. The inside of the bladder can be connected via the channel in the connecting nipple 6 with the inside of the above-mentioned system.

In the space (10) between the bladder 2 and the housing 1 there is pressurized gas which can be conveyed into the expansion tank via a nipple 11.

The housing 1 of the expansion tank is made up of two parts 12 and 13, which are welded together at 14.

The bladder 2 is provided on the outside with an open-holding element 15, in the form of a rigid ring fixed to the bladder. The ring 15 lies in a plane which is essentially perpendicular to the centre line 16 of the expansion tank. The ring is situated between two circumferential ribs 17 and 18 which are fitted at a distance from each other, which limits the possible movement of the ring in the axial direction. The limitation of the movement by the rib 18 is important to prevent uncontrolled pulling forces on the edge 8.

The rib 17 is formed by a circumferential inward projection in the top part 12 of the housing 1, and the rib 18 is formed by the inward-bent end part of the bottom part 13 of the housing. The planes in which the ribs 17 and 18 are situated are essentially perpendicular to the centre line of the expansion tank.

Through the above-mentioned measures, the bladder 2 is held at the ring 15 in a round shape determined by the ring 15, and the freely movable part 19 of the bladder i.e. the part of the bladder which is only bounded by the ring, and which is situated opposite the connection aperture 5, can move essentially only in the axial direction of the expansion tank. This means that the bladder is not pressed together in uncontrolled fashion during drainage, and in the collapsed state it takes up more or less the shape shown in Fig. 1, which is advantageous for the service life of the bladder.

In order to prevent the bladder 2 fully closing off the connection aperture 5 in this state, the bladder is provided on the inside, at the point opposite the connection aperture, with a number of upright ribs 19a, between which the liquid can flow from the connection aperture 5 into the bladder and back.

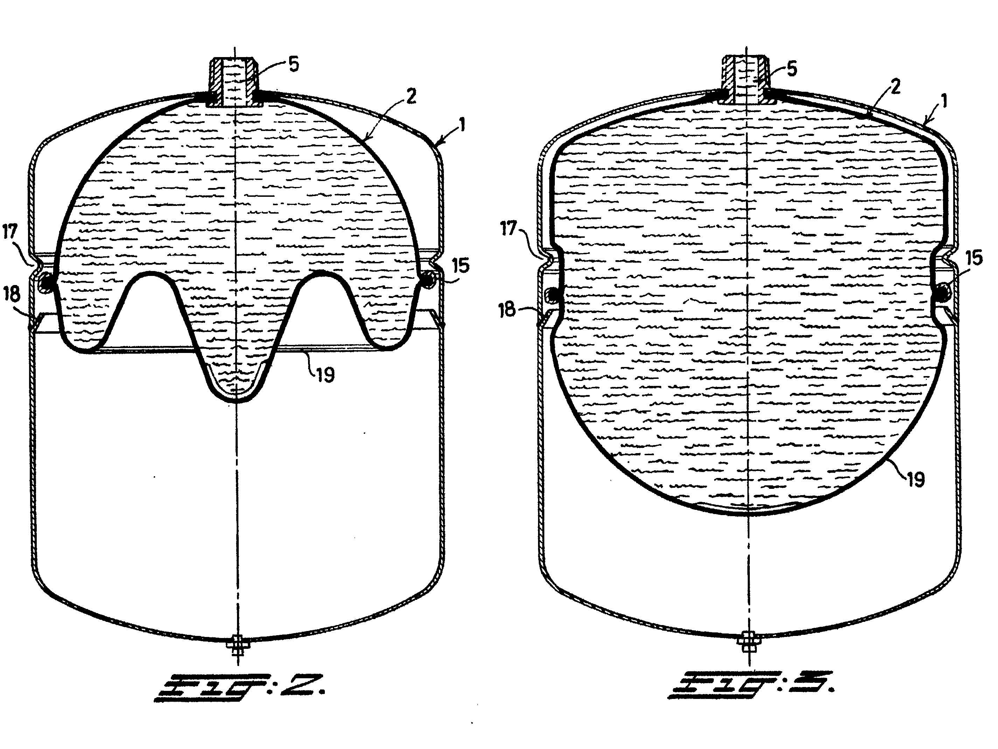

Figs. 2 and 3 show the position in which the bladder is partially and virtually fully expanded through inflowing liquid.

It can be seen from both figures that the movement of the ring is limited by the two ribs 17 and 18.

In the embodiment shown the bladder 2 is made up of two parts, i.e. a part 20 which extends between the ring 15 and the connecting nipple 6, and the earlier-mentioned part 19. The edges 21 and 22 of the two parts 19 and 20 are connected to each other in sealing fashion.

In the embodiment shown (see also Fig. 4) the edges 21 and 22, which project to the outside, lie against each other and are clamped together by the ring 15 which in the embodiment shown has a U-shaped cross section. The edges 21 and 22 are accomodated in the U-shape and are clamped to each other by the legs 23 and 24 of the U-shaped ring. The legs 23 and 24 are bent towards each other, so that very good clamping is obtained.

The edges 21 and 22 of the bladder parts 19 and 20 can also be provided with meshing circumferential ribs 25 and recesses 26, in order to obtain a very reliable seal.

From the point of view of manufacture, making the bladder of two parts is very advantageous, since the manufacture of a one-piece bladder with a small opening is very difficult.

As can be seen from the above description, the expansion tank according to the invention has two important advantages:
– the bladder cannot be pressed together in uncontrolled fashion and crumpled together, which is advantageous for the service life thereof; and
– the bladder is easy to manufacturez.

## Claims

1. Expansion tank comprising a housing (1) and a bladder (2) inside the housing, the bladder being made up of two parts (19, 20) connected to each other along their free edges (21, 22) and comprising means (15) fixed to the bladder (2) for holding it open, characterized in that each part (19, 20) has a peripheral outwardly-extending free edge (21, 22) and the free edges (21, 22) of the two bladder parts (19, 20) are clamped onto each other in a sealing fashion by a rigid clamping ring (15) having an essentially U-shaped cross-section defining two inwardly extending legs (23, 24), the free edges (21, 22) of the two bladder parts (19, 20) being accommodated between the legs (23, 24) of the clamping ring (15), said clamping ring serving to hold the bladder (2) open.

2. Expansion tank according to claim 1 characterized in that the two legs (23, 24) of the clamping ring (15) extend towards each other.

3. Expansion tank according to claim 1 or 2, characterized in that the clamping ring (15) is made of metal.

4. Expansion tank according to anyone of claims 1 to 3, characterized in that the housing (1) includes inwardly-extending projections (17, 18) disposed at the inner side of the housing and lying in two spaced apart imaginary planes which extend essentially perpendicular to the centre line (16) of the housing, and that the clamping ring (15) is positioned between the projections (17, 18) and is movable between the imaginary planes formed thereby.

5. Expansion tank according to claim 4, characterized in that the projections are formed by two inwardly-extending circumferential ribs (17, 18).

6. Bladder for an expansion tank according to anyone of claims 1 to 5.

## Patentansprüche

1. Ausdehnungsgefäß mit einem Gehäuse (1) und einer Blase (2) innerhalb des Gehäuses, wobei die Blase aus zwei miteinander entlang ihrer freien Ränder (21, 22) verbundenen Teilen (19, 20) besteht, und wobei an der Blase (2) Mittel (15) befestigt sind, um sie offen zu halten, dadurch gekennzeichnet, daß jeder Teil (19, 20) am Umfang einen sich nach außen erstreckenden freien Rand (21, 22) aufweist und die freien Enden der beiden Blasenteile (19, 20) in abdichtender Weise durch einen starren Klemmring (15) aufeinandergeklemmt sind, der einen im wesentlichen U-förmigen Querschnitt besitzt und zwei sich einwärts erstreckende Schenkel (23, 24) bildet, wobei die freien Ränder (21, 22) der beiden Blasenteile (19, 20) zwischen den Schenkeln (23, 24) des Klemmrings (15) untergebracht sind, wobei der Klemmring dazu dient, die Blase (2) offenzuhalten.

2. Ausdehnungsgefäß nach Anspruch 1, dadurch gekennzeichnet, daß die beiden Schenkel (23, 24) des Klemmrings (15) aufeinander zu verlaufen.

3. Ausdehnungsgefäß nach Anspruch 1 oder 2, dadurch gekennzeichnet, daß der Klemmring (15) aus Metall besteht.

4. Ausdehnungsgefäß nach einem der Ansprüche 1 bis 3, dadurch gekennzeichnet, daß das Gehäuse (1) sich einwärts erstreckende Vorsprünge (17, 18) aufweist, die an der Innenseite des Gehäuses angeordnet sind und in zwei einen Abstand voneinander aufweisenden imaginären Ebenen liegen, die sich im wesentlichen senkrecht zur Mittellinie (16) des Gehäuses erstrecken, und daß der Klemmring (15) zwischen den Vorsprüngen (17, 18) angeordnet ist und zwischen den dadurch gebildeten imaginären Ebenen bewegbar ist.

5. Ausdehnungsgefäß nach Anspruch 4, dadurch gekennzeichnet, daß die Vorsprünge durch zwei sich am Umfang nach innen erstreckende Rippen (17, 18) gebildet sind.

6. Blase für ein Ausdehnungsgefäß nach einem der Ansprüche 1 bis 5.

**Revendications**

1. Vase d'expansion comprenant une cuve (1) et une vessie (2) à l'intérieur de la cuve, la vessie étant constituée de deux parties (19, 20) reliées l'une à l'autre le long de leurs bords libres (21, 22) et comprenant des moyens (15) fixés à la vessie (2) pour la maintenir ouverte, caractérisé en ce que chaque partie (19, 20) présente un bord libre périphérique (21, 22) s'étendant vers l'extérieur et les bords libres (21, 22) des deux parties (19, 20) de la vessie sont serrés l'un contre l'autre de façon étanche par un anneau de serrage rigide (15) à section transversale sensiblement en forme de U définissant deux ailes (23, 24) s'étendant vers l'intérieur, les bords libres (21, 22) des deux parties de vessie (19, 20) étant reçus entre les ailes (23, 24) de l'anneau de serrage (15), ledit anneau de serrage servant à maintenir la vessie (2) ouverte.

2. Vase d'expansion suivant la revendication 1, caractérisé en ce que les deux ailes (23, 24) de l'anneau de serrage (15) s'étendent l'une vers l'autre.

3. Vase d'expansion suivant la revendication 1 ou 2, caractérisé en ce que l'anneau de serrage (15) est en métal.

4. Vase d'expansion suivant l'une quelconque des revendications 1 à 3, caractérisé en ce que la cuve (1) comprend des saillies s'étendant vers l'intérieur (17, 18), disposées du côté intérieur de la cuve et situées dans deux plans imaginaires mutuellement espacés que sont sensiblement perpendiculaires à l'axe principal (16) de la cuve, et en ce que l'anneau de serrage (15) est situé entre les saillies (17, 18) et peut se déplacer entre les plans imaginaires définis par ces dernières.

5. Vase d'expansion suivant la revendication 4, caractérisé en ce que les saillies sont constituées par deux nervures circonférentielles (17, 18) s'étendant vers l'intérieur.

6. Vessie pour un vase d'expansion suivant l'une quelconque des revendications 1 à 5.

FIG: 1.

FIG: 4.

Fig.5.

Fig.2.